# EUROPEAN PATENT SPECIFICATION

(11) **EP 0 659 292 B1**
(45) Date of publication and mention of the grant of the patent: **24.02.1999**
(21) Application number: 94918488.1
(22) Date of filing: 04.07.1994
(51) Int. Cl.: G08B 5/22, H04Q 7/06

(54) **DIGITAL COMMUNICATIONS SYSTEM, A TRANSMITTING APPARATUS AND A RECEIVING APPARATUS FOR USE IN THE SYSTEM**
DIGITALES NACHRICHTENSYSTEM, UND DAZU GEEIGNETES UBERTRAGUNGS- UND EMPFANGSGERÄT
SYSTEME DE COMMUNICATIONS NUMERIQUE, APPAREIL DE TRANSMISSION ET APPAREIL DE RECEPTION UTILISES DANS LEDIT SYSTEME

(30) Priority: 13.07.1993 GB 9314516
(43) Date of publication of application: 28.06.1995
(73) Proprietor: Koninklijke Philips Electronics N.V., 5621 BA Eindhoven (NL); PHILIPS ELECTRONICS UK LIMITED, Croydon CR9 3QR (GB)
(72) Inventor: SHARPE, Anthony, Keith, Cambridge CB1 5AG (GB)
(74) Representative: Moody, Colin James
(86) International application number: IB9400189
(87) International publication number: WO9502873

(56) References cited:
- EP-A- 0 342 638
- EP-A- 0 536 831
- US-A- 4 369 443

## Description

### TECHNICAL FIELD

The present invention relates to a digital communications system and to a transmitting apparatus and a receiving apparatus for use in the system. More particularly, the present invention relates to the compression of alpha-numeric messages for transmission in digital communication systems such as digital radiopaging system.

For convenience of description the present invention will be described with reference to a digital radiopaging system but it is to be understood that the present invention is applicable to other digital transmission systems.

### BACKGROUND ART

An internationally used digital paging code is the CCIR Radiopaging Code No 1 which is also known as POCSAG (Post Office Code Standardisation Advisory Group). Details of this radiopaging code are given in a book entitled "The Book of the CCIR Radiopaging Code No 1" published by the Radiopaging Code Standards Group (RCSG) in 1986. Appendix 1 discloses the specification for a standard Code Format for use in Wide Area Radiopaging Systems the details of which will be known by those skilled in the art. However, for the sake of completeness the signal format used comprises a batch structure consisting of preamble and a succession of concatenated batches. Each batch consists of a synchronisation code word plus 8 frames each comprising 2 code words, making a total of 17 code words. There are two types of code words, address code words and message code words each comprising 32 bits. In the case of a message code word 20 bits, that is bit 2 to bit 21 inclusive, form a data field and these are followed by parity check bits. Bits 20 and 21 of an address code word, which precedes the message code word(s), are function bits and are used to select the format of decoding of concatenated message code words. Appendix 1, subsection 4.1 states that for the sole transmission of messages in decimal numbers, 4 bits per character are used and the function bits are set to 00. Subsection 4.2 refers to an Alpha-numeric or General Data Format and states that the ISO 7-bit coded character set is used and that the function bits are set to 11. When sending a message, the batch structure is maintained. Thus a message comprises an address code word and concatenated message code words plus a synchronisation code word at the beginning of each batch. As Appendix 1 is quite specific in stating that the formats shall not be mixed within any one message then the function bits in the address code word effectively condition the paging receiver to the method of deformatting the received message.

European Patent Specification EP-A1-0 536 831 discloses a method of compressing messages by means of storing words in a ROM dictionary and transmitting two 7 bit characters identifying the location of the word in the dictionary. The receiver has an identical ROM dictionary. In the case of a word not being in the dictionary then this is sent letter by letter as 7 bit ASCII characters. Switch characters are inserted into an encoded message to indicate the change from dictionary references to ASCII characters and vice versa. By using pairs of switch characters a wider range of options is available such as being able to use several dictionaries. A disadvantage of using a switch character or switch characters inserted into a message is that if its or their occurrence coincides with a fade in the received signal, the receiver will decode the subsequently received part of the message incorrectly.

### DISCLOSURE OF INVENTION

An object of the present invention is to compress a message signal by a method which is robust against signal fading.

According to a first aspect of the present invention there is provided a digital communications system comprising a transmitting means and a receiving means, in which the transmitting means has means for encoding alpha-numeric messages in at least two formats, at least one of which formats is a compressed format, characterised in that a data field of a message is preceded by a command and control field and in that the first character of the command and control field is indicative of whether a compressed format has been used in the data field.

According to a second aspect of the present invention there is provided a digital communications system comprising a transmitting means and a receiving means, in which the transmitting means has means for encoding alpha-numeric messages in at least two modes which may switch from one mode to the other mode and vice versa during the encoding of a message, characterised in that a data field of a message is preceded by a command and control field comprising indications which can be used by a receiving means to switch from one decoding mode to another decoding mode and vice versa in order to recover the message data.

According to a third aspect of the present invention there is provided a receiving apparatus for use in the digital communications system in accordance with the present invention, the receiving apparatus comprising means for receiving and recovering a message comprising a command and control field and a data field, and means for decoding the code words in the data field in accordance with indications given in the command and control field which are used to enable the decoding of the data field to be compatible with the encoding of the message data, said data field comprises alpha-numeric messages in at least two formats, at least one of which formats is a compressed format whereby said indications are indicative of whether a compressed format has been used in the data field.

According to a fourth aspect of the present invention there is provided a transmitting apparatus for use in the digital communications system in accordance with the present invention, the transmitting apparatus comprising means for encoding alpha-numeric messages in at least two formats, at least one of which formats is a compressed format, characterised in that a data field of a message is preceded by a command and control field and in that the first character of the command and control field is indicative of whether a compressed format has been used in the data field.

One of said at least two modes may comprise the transmission of two 7 bit characters identifying the location of a word in a ROM dictionary and another of said at least two modes may comprise the transmission of ASCII characters representing letters of words not included in the ROM dictionary. By the command and control field containing indications which a receiver can use to switch between dictionary locations and ASCII characters, then provided this field is received correctly, any fades occurring during the receipt of a data field will not affect the decoding operation but only the data to be decoded.

The indications may indicate the location of, and number of, ASCII characters in a series of ASCII characters in the data field.

In order to avoid the command and control field being excessively long, thereby reducing the benefits obtained by word compression, the number of series of ASCII characters may be limited to a maximum n. When there are n series of ASCII characters, the nth series terminates the data message.

If desired the command and control field may include an indication of the number of code words in a message.

### BRIEF DESCRIPTION OF DRAWINGS

The present invention will now be described, by way of example, with reference to the accompanying drawings, wherein:
Figure 1 is a block schematic diagram of a base or primary station for a digital radiopaging system,
Figure 2 is a block schematic diagram of a paging receiver or secondary station,
Figure 3 in a diagram A illustrates diagrammatically the various fields in a compressed word message and in diagram B illustrates details of a Command and Control field CCF related to the format shown in Table 1,
Figure 4 is a flow chart relation to a receiver protocol for processing received data messages, and
Figure 5 illustrates how a widely used group of words may be transmitted in the system in accordance with the present invention.

In the drawings, the same reference numerals have been used to indicate corresponding features.

### MODES FOR CARRYING OUT THE INVENTION

The present invention will be described with reference to a digital radiopaging system which can be overlaid transparently on a system operating in accordance to the CCIR Radiopaging Code No 1 but the encoding principles disclosed can be applied to any other data message system having a primary station and secondary station which are linked by cable, optical fibre and/or radio or a data storage and retrieval system.

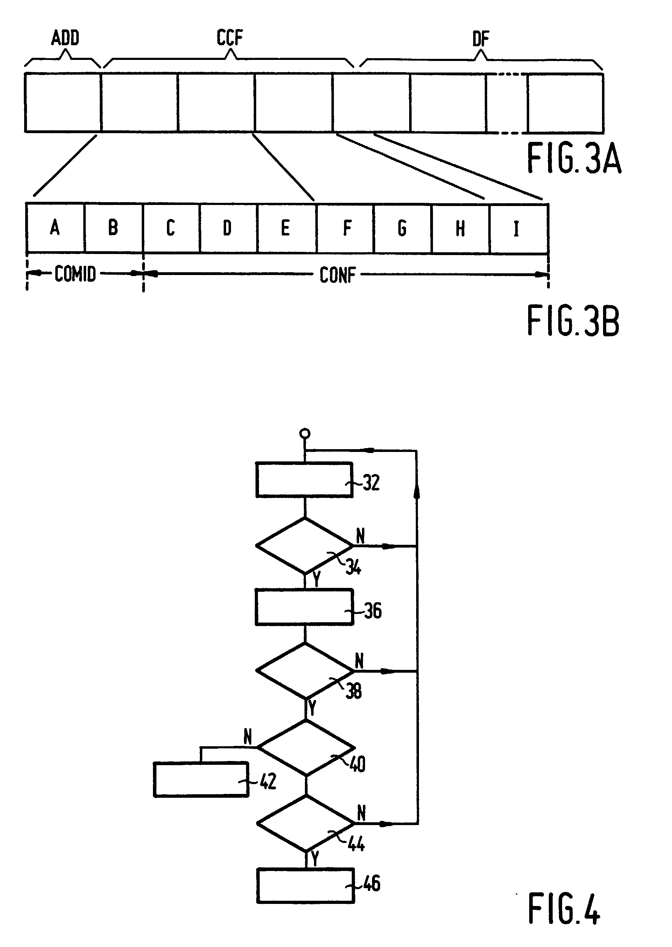

In the case of a digital radiopaging system, such as one operating in accordance with CCIR Radiopaging Code No 1, messages to be relayed to secondary stations may be sent orally to a paging centre whereat an operator at a keyboard 10 types in the addresses and messages which are encoded in accordance with the ASCII or ISO-7 bit coded character set and sent to a control stage 14. Alternatively, a subscriber with a personal computer and MODEM 11 is able to send messages directly to the control stage 14 by way of a landline connection. The control stage 14 includes spell checking means and a dictionary in the form of a ROM 12 containing a vocabulary of say 16380 commonly used words. The dictionary is interrogated to see if it includes the word which has just been stored in the control stage, if it does then the address of the location of the word in the ROM is read-out. This address for the sake of description comprises two ASCII or ISO 7-bit characters. A message format stage 16 is coupled to the control stage 14 which feeds encoded data to the stage 16 either in the form of concatenated ROM addresses each representative of a compressed word, assuming that the words are in the dictionary, or ASCII-7 bit coded characters for words not in the dictionary. As will be explained later with reference to Figure 3 the completed message will include the Address Field ADD and a Command and Control Field CCF which comprises indications of where a change from a ROM address to ASCII characters and vice versa occurs. Optionally an extended address field may be included between the Address Field ADD and the Command and Control Field CCF.

Once the encoded message string has been assembled in say a buffer store, it is analysed to determine where the changes from ROM dictionary addresses to ASCII characters and vice versa occur and the occurrences of these changes are included in the Command and Control Field CCF which together with the Address Field ADD is concatenated with a Data Field DF. The message format stage 16 then forms code words from successive 20 bit blocks of the assembled, compressed message in accordance with the CCIR Radiopaging Code No 1. Since the format has been described briefly in the preamble of this specification then in the interests of brevity it will not be repeated. The string of code words is then applied to a transmitter 18 for onward transmission.

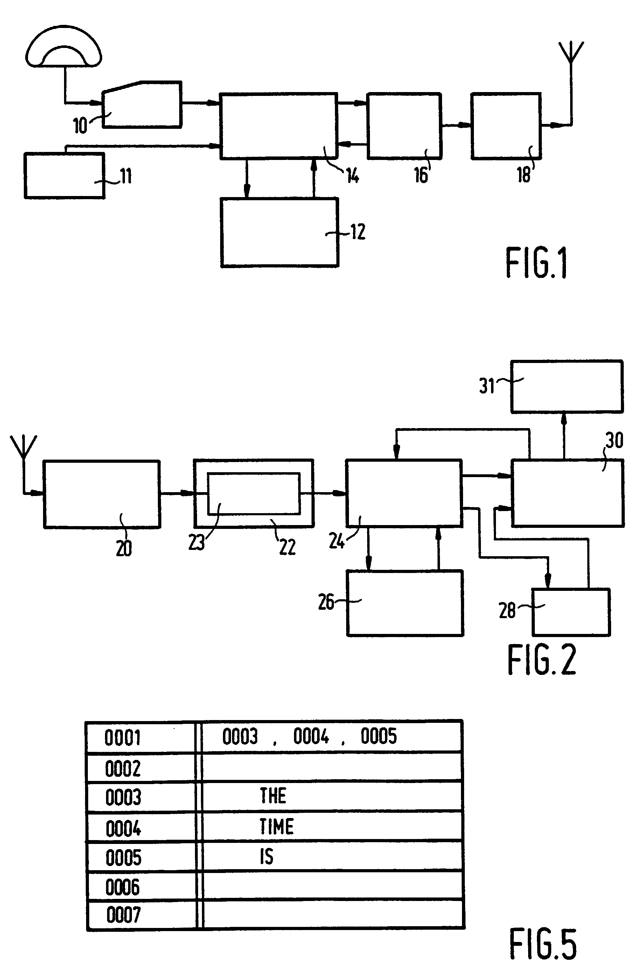

Figure 2 illustrates a secondary station or paging receiver which comprises a radio receiver 20 which is periodically energised to be able to receive an address code word, if sent, in its appropriate frame. If the address code word is followed by message code words, the addressed paging receiver remains energised to receive the message code words which are passed to a decoding stage 22 which includes means for error checking and correction within the limits permitted by the CCIR Radiopaging Code No 1. The decoding stage 22 checks addresses of paging signals received in the appropriate frame for a paging message being transmitted to the particular pager. If a match is detected between a received address and an internally stored address then the paging receiver remains energised so that the concatenated message data is stored in a buffer memory 23 in the decoding stage 22. Once all the code words have been received, the Command and Control Field CCF is decoded and checked for errors. If this field contains uncorrectable errors, the Data Field DF of the received message is discarded because without the knowledge of where the changes from dictionary references to ASCII characters and vice versa occur the Data Field cannot be decoded. Assuming that the Command and Control Field CCF is decoded correctly and the Data Field DF is subsequently decoded the stream of bits is applied to a microcontroller 24 which stores the message data in a RAM 26.

When the user of the paging receiver wants to read-out the message(s) stored in the RAM 26, the microcontroller 24 is activated and reads out the data bits of the stored message. In the case of a ROM address, this is supplied to a ROM 28 which comprises the same dictionary as is stored in the ROM 12 (Figure 1) of the primary station. Assuming that the address corresponds to an entry in the ROM 28 then the relevant word including an end space character is read-out in the form of ASCII characters and is supplied to a display driver 30.

Alternatively, in the case of some of the bits being read-out of the RAM 26 being ASCII characters then the microcontroller 24 supplies these directly to the display driver 30.

The read-out from the ROM 28 has to be controlled such that word characters ASCII form are supplied in the correct sequence to the display driver 30. One way of doing this is for the space character at the end of a word to be detected by the microcontroller 24. A liquid crystal display (LCD) panel 31 is connected to the display driver 30.

In its most elementary form only two methods of encoding alpha-numeric data are used, namely as a ROM address comprising two ASCII 7-bit coded characters when a dictionary reference is used and character by character using ASCII 7-bit coded characters where a dictionary reference cannot be used.

Figure 3 illustrates in diagram A the message compression control format and message structure and in diagram B the format of the Command and Control Field CCF. As indicated already the code word structure of the Address Field ADD, Command and Control Field CCD and the Data Field DF is in accordance with the CCIR Radiopaging Code No 1 and in consequence is transparent to those users of a paging system having paging receivers capable of receiving uncompressed alpha-numeric messages only. As the format of the Address Field is conventional then in the interests of brevity it will not be discussed. The Command and Control Field CCF which follows the Address Field ADD comprises a series of 7-bit characters which as shown in diagram B comprise the Command Identity COMID and the Control Field CONF. The Data Field DF is a series of code words constituted by a string of 7-bit characters defining either the character identities in a ROM dictionary words or ASCII characters contained in the message. Optionally, an extended address field comprising a sequence of characters and digits is transmitted immediately after the Address Field ADD and before the Command and Control Field CCF.

Termination of the Data Field DF will be indicated by the receipt of another address or an idle code word but optionally an end of message code word may be included.

Referring to diagram B, the Command Identity COMID comprises a 7-bit character pair which can only occur in the first two character positions A,B of the Command and Control Field CCF in order to instruct the pager to operate in the appropriate compressed word mode. The Control Field CONF is a field comprising a plurality of character positions up to a predetermined maximum number. This field CONF gives to a pager the decoding information about the message, for example where the pager should switch from decoding character identities to ASCII characters and vice versa and the length of the message. This field will not exceed five code words. The Control Field CONF increases in steps of 14 bits (2x7 bits) because each pair of 7-bit numbers defines the start and end locations of each ASCII character series or island in the Data Field DF. The Control Field can have an even or odd number of 7-bit characters. In the case of the format of the Command and Control Field shown in Table 3 below an odd number of 7-bit characters defines the length of the message and an even number means that the last two characters define the length.

The Command and Control Field CCF may have various formats and examples are given below.

**TABLE 1**

| Character | | Function | Values |
|---|---|---|---|
| C O M I D | A | Command Character. Word compressed message. | xx |
| | B | Language and case identity. | |
| | | Language 1 - upper case | 01 |
| | | Language 1 - mixed case | 02 |
| | | Language 2 - upper case | 03 |
| | | Language 2 - mixed case | 04 |
| C O N F | C | Number of 7 bit characters in Command and Control Field. | 0 to 12 binary |
| | D | Location of first ASCII character in Data Field DF, for example the number of 7-bit characters from the end of the address code word. | 4 to 128 binary |
| | E | Number of ASCII characters following and including location "D" before word coding begins again. | 1 to 128 binary |
| | F | Location of the first of a second series of ASCII characters in DF | 5 to 12 binary |
| | G | Number of ASCII characters following and including location F. | 1 to 12 binary |
| | H | Location of the first of a third series of ASCII characters in DF. | 6 to 12 binary |
| | I | Number of ASCII characters following and including location H. | 1 to 12 binary |

**TABLE 2**

| Character | | Function | Values |
|---|---|---|---|
| C O M I D | A | Command Character. Word compressed message. | xx |
| | B | Language and case identity. | |
| | | Language 1 - upper case | 01 |
| | | Language 1 - mixed case | 02 |
| | | Language 2 - upper case | 03 |
| | | Language 2 - mixed case | 04 |
| C O N F | C | Number of code words in the message including the address code word (not including any terminating code word). | 3 to 128 binary |
| | D | Number of 7 bit characters in Command and Control message. | 0 to 12 |
| | E | Location of first ASCII character in Data Field DF, for example the number of 7-bit characters from the end of the address code word. | 4 to 128 binary |
| | F | Number of ASCII character following and including location "C" before word coding begins. | 1 to 128 binary |
| | G | Location of the first of a second series of ASCII characters in DF | 5 to 12 binary |
| | H | Number of ASCII characters following and including location F. | 1 to 12 binary |
| | I | Location of the first of a third series of ASCII characters in DF. | 6 to 12 binary |
| | J | Number of ASCII characters following and including location F. | 1 to 12 binary |

**TABLE 3**

| Character | | Function | Values |
|---|---|---|---|
| C O M I D | A | Command Character. | |
| | | Dictionary A - mixed case | 0000001 |
| | | Dictionary A - upper case | 0000010 |
| | | Dictionary B - mixed case | 0000011 |
| | | Dictionary B - upper case | 0000100 |
| | | ASCII only | 0001001 |
| | B | Number of 7-bit characters in Control Field. | 3 to 12 binary |
| C O N F | C | Number of Word Identities from the end of the Control Field to the first ASCII series | 0 to 127 binary |
| | D | Number of ASCII characters in the first series of ASCII characters. | 0 to 127 binary |
| | E | Number of Word Identities in the second series of Word Identities. | 0 to 127 binary |
| | F | Number of ASCII characters in the second series of ASCII characters | 0 to 127 binary |
| | G | Number of Word Identities in the third series of Word Identities. | 0 to 127 binary |
| | H | Number of ASCII characters in the third series of ASCII characters. | 0 to 127 binary |
| | | Number of Word Identities in the fourth series of Word Identities. | 0 to 127 binary |
| | J | Number of ASCII characters in the fourth series of ASCII characters. | 0 to 127 binary |
| | @ | Number of code words in the total message excluding the address code word. | 2 to 128 bin or 2 to 16384 bin |

Comparing Tables 1, 2 and 3 character positions A and B comprise a command character indicating that a word compressed message is following and optionally an indication of the number of characters in the Command and Control Field CCF (Table 3). Thus if a pager determines that the first character is not a command character, it will assume that the appended message is a normal alpha-numeric message and will decode it accordingly.

Table 1 is able to indicate a greater number of locations of, and numbers of, ASCII characters than are Tables 2 and 3 because in Tables 2 and 3 character position C and @ respectively comprise an indication of the total number of code words in a message in one case (Table 2) including the address code word and in the other case (Table 3) excluding the address code word, whereas this indication is omitted from Table 1.

Since the Control Field CONF has a maximum number of character positions, for example positions C to I in diagram B of Figure 3 which relates to the format of Table 1, this imposes a limit on the number of "islands" of ASCII characters which can be identified. If the message when assembled at the primary station has more than say 4 islands of ASCII characters, the user can either rearrange the message or accept the fact that the final island of ASCII characters extends to the end of the message even though it contains words which could otherwise be sent as a 7-bit character pair.

The Command and Control Field CCF has to obey the following rules:
1. The Command and Control Field must be received without error. If the uncorrectable code words are received during the command and control message the paged message cannot be accepted.
2. All pagers capable of receiving word compressed messages must receive the first ASCII character after the address code word without error when receiving non word compressed (ASCII) messages (that is the first message code word) in order to accept the paged message.
3. If the first 7-bit character of the message after the address code word (and any associated extended format information) is not a command character the pager accepts the message as a conventional alpha-numeric message conforming to the CCIR Radiopaging Code No 1 standard.
4. The Control Field CONF will have a maximum of twelve 7-bit characters. This means that the complete Command and Control Field CCF will have a maximum length of five code words. The Data Field DF will thus contain a string of word identities in which a maximum of four islands of ASCII character strings are permitted.
5. If the message to be sent contains more words that are not in the dictionary than can be conveniently fitted into four islands then words in the dictionary will be chosen by the encoding computer to be sent in ASCII character format in order to restrict the strings of ASCII characters to four while maintaining maximum possible compression.
6. If the Data Field DF is to be concluded with one string of ASCII characters that terminates the message then the number of ASCII characters in this last island need not be included in the Control Field CONF.
7. In the case of Table 3 the value corresponding to C will be set to zero if the message starts with ASCII characters. Further the values corresponding to D to I may be set to zero to extend the effective word or character count of the preceding series.

Rules 1 to 3 apply to the pager and can be summarised by the flow chart shown in Figure 4. Block 32 denotes the pager being energised in its predetermined frame period as required by CCIR Radiopaging Code No 1. Block 34 denotes checking if the received address is one of those assigned to the pager, if it is not (N) the pager is de-energised until the beginning of the next batch. If the address does belong to the pager (Y), the pager remains energised to receive the message concatenated with the address code word which is stored in a buffer store, block 36. A check is made to see if the first ASCII character is correct, block 38, and if it is not (N) then the pager reverts to its de-energised state for the remainder of the batch. If it is correct (Y), then in block 40 a check is made if the first ASCII character is a command character (see Tables 1, 2 and 3) and if the answer is negative (N) then the stored message is decoded as a normal alpha-numeric message, block 42. If the first character is a command character (Y), then in block 44, a check is made to see if the Command and Control Field (CCF) has been received correctly, if not (N), the flow chart reverts to the block 32 and the data in the buffer store is erased, but if it is, the data field is decoded as a compressed message block 46.

Referring now to the Data Field DF, the capacity of the ROM based word dictionary within the pager is limited to 16380 words. This limitation results from the addressing capacity within two 7-bit characters which are used to identify the location of a word in the dictionary. The dictionary may be specialised to a certain technical field but alternatively may be of a more general application. The nature of and limitation in the size of the word dictionary does not affect the message content because the words which are not in the dictionary can be transmitted as ASCII characters. The total system compression ratio will be that achieved by the average message content and not the worst case. As mentioned previously when a ROM dictionary word is decoded it usually includes a space. However, there are some exceptions when the ROM dictionary word relates to punctuation characters such as parenthesis. The number of words which can be stored in the ROM dictionary can be increased by adding suffixes, such as plurals and different tenses, to singular nouns and verbs thus avoiding the need to store the plurals of all the nouns and all the tenses of verbs.

In order to add a suffix it is necessary to delete the space and add the suffix together with a space. In the following examples a space delete character is represented by [#] and a space character by [_]. Every suffix word or word extension is transmitted by its own two 7-bit word identify which is held in the dictionary as such.

For the addition of word plurals, the following suffixes can be stored:
[#es_] and [#s_].

In the case of verbs, the suffixes can be:
[#ing_] and [#ed_].

Punctuation can be represented as follows:
[#)_]; [#._]; [#?_]; [#'_] and [(].

Words not normally held in the dictionary may be constructed by joining together two stored words and deleting the space between them. Thus:
[Bird] [#] [wood] = Birdwood
[Hay] [#] [ward] = Hayward

Messages which contain a mixture of upper and lower case characters can be handled by using the following rules:
1. The first character of a message is always upper case.
2. The first character of a word following a sentence terminator, such as a full stop, question mark or exclamation mark, is always upper case.
3. Real names, these are words held in the dictionary with the first character always upper case.
4. Some words are classed as special names (e.g acronyms) and are held in the dictionary with all characters upper case.
5. When it is necessary to present words held as lower case in the dictionary with the first or all characters in upper case this can be achieved with the Case Identities.

There are three case change Case Identities that can occur within the Data Field DF:
a. Change to upper case the first character of the next word,
b. Change to upper case for all following words,
c. Change to mixed case for all following words.

It is noted that Case Identities will not be transmitted in messages with command characters in the Control Field that specify all characters in the message be upper case. A command character "upper case" overrides Case Identities.

The transmission of the two 7-bit word identity characters in the Data Field DF conforms to the CCIR Radiopaging Code No 1, that is the characters will be transmitted in bit order, least significant bit (LSB) first and in character order, most significant character first, as a message is presented in word order. This is illustrated in Table 4 below in respect of the message "Please call the......".

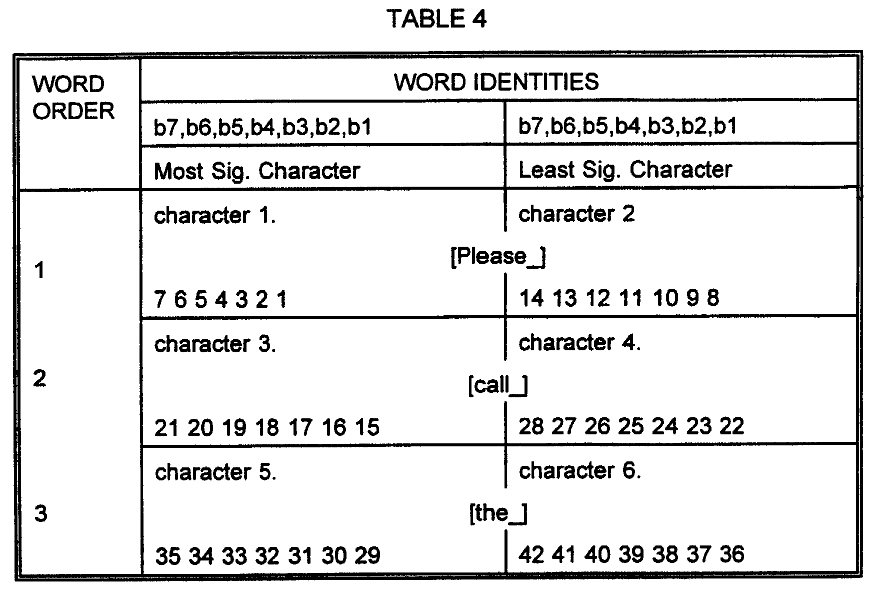

In order to illustrate the word compression method in accordance with the present invention the following short message will be considered:
"Please call Fred urgently."

If this was encoded as 7-bit ASCII characters including space characters and the full stop it will require 182 bits. On the basis of 20 bits to a code word, such a message will require 10 code words plus an address code word.

If it is assumed that "Please", "call", "urgently" and the full stop [#._] are each stored as two 7-bit characters and "Fred+space" are ASCII 7-bit characters then the Data Field DF will be (4 x 14) + (5 x 7) bits which equal 91 bits. Additionally, the number of bits in the Command and Control Field (CCF) using Table 1 will be A+B+C+D+E = 5x7 = 35. The total number of bits is 91 + 35 = 126 which corresponds to 7 code words plus an address code word. Three code words are saved compared to an all 7 bit ASCII character message. In this particular example, if "urgent" and "ly" [#ly_] are stored separately the additional 14 bits when added to 126 will still not increase the number of code words required.

Figure 5 illustrates a method by which commonly used phrases or groups of words may be encoded to save bits. In a sentence "The time is 4 p.m.", the first three words frequently will be used as a group and the words "the", "time" and "is" will be stored at respective locations in the ROM. Instead of sending three address locations totalling 42 bits, a single ROM address for the phrase "The time is" is sent, for example 0001. At memory location 0001, there is stored the memory locations, say 0003, 0004 and 0005 of the respective words "the", "time" and "is" which at the paging receiver are read-out in that order from the ROM. Thus only a 14 bit address location need be transmitted thereby saving 28 bits. Other phrases like "as soon as possible" could be handled in a similar way, although it may be possible to store the abbreviation "asap" as a single item in the ROM.

Compressing the alpha-numeric message data in the information field of a paging message reduces the message length for a given message content and thus increases the capacity of a paging channel and thereby the number of subscribers. Reducing the message length also has the advantages of increasing the message success rate in a given rf environment and enhancing the battery life of the pagers.

Although the error correction and detection capability of the CCIR Radiopaging Code No 1 will be usable in the system in accordance with the present invention, the effect of errors on the compressed words may be more serious so that, for example, if a ROM address cannot be decoded satisfactorily then rather than reproduce a word which may be completely nonsensical, an indication, such as a start, may be displayed to indicate to a user that a non-decodable word has been received.

Many variations of the described embodiments are possible. For example, a dictionary can be divided into say 3 or 4 sections, one section comprising say one thousand of the most frequently used words which are used and the subsequent sections comprising differing degrees of less frequently used words. The most frequently used words may include single alphabetical letters and well known combination of letter such as "ly", "ley", "ph" and "es" and numbers.

If say a dictionary of say one thousand words, letters and numbers is usable then the dictionary locations can be represented as pairs of 5-bit characters and when a message is encoded if a word is not present in the dictionary section it is encoded letter by letter using pairs of 5-bit characters. Word locations in larger dictionary sections can be represented by pairs of 6-bit characters.

Alternatively, ASCII 7-bit characters may be used to represent letters of a word not present in the dictionary section rather than pairs of 5-bit characters. In any event the relevant information required by a receiver to decode a data message is contained in the Command and Control Field, which comprises 7-bit ASCII characters, the first character A (Figure 3) always is used to indicate that a form of message compression is used. Different dictionary sections can be indicated in the CONF field by using non-printable ASCII 7-bit characters.

If an intelligent encoder is used, it can encode a message according to various formats and decide which one gives the best message compression. The Command and Control Field is then generated to contain the required information that a receiver will require to decode the message field.

The system in accordance with the present invention enables message words to be encoded in a transparent, effective and flexible manner which increases the message capacity of a CCIR Radiopaging Code No 1 system beyond that envisaged at its introduction. The present invention can be applied to other digital radiopaging systems using paging codes such as GOLAY and ERMES.

In describing the present invention in the context of a digital paging system, no discussion has been made of sending tone only alert signals, that is address signals only, and of the facility of producing audio, optical or vibrational alert signals at the receiver as they do not form a part of the invention step disclosed herein.

### INDUSTRIAL APPLICABILITY

Transmission of alpha-numeric messages, such as digital paging messages.

## Claims

1. A digital communications system comprising a transmitting means and a receiving means, in which the transmitting means has means for encoding alpha-numeric messages in at least two formats, at least one of which formats is a compressed format, characterised in that a data field of a message is preceded by a command and control field and in that the first character of the command and control field is indicative of whether a compressed format has been used in the data field.

2. A system as claimed in claim 1, characterised in that said first character is an ASCII 7 bit character.

3. A system as claimed in Claim 1, characterised in that said encoding means, when in said compressed format, is adapted to encode alpha-numeric messages in at least two modes which may switch from one mode to another mode and vice versa during encoding of a message and in that the command and control field comprises indications which can be used by a receiving means to switch from one decoding mode to another decoding mode and vice versa in order to recover the message data.

4. A digital communications system comprising a transmitting means and a receiving means, in which the transmitting means has means for encoding alpha-numeric messages in at least two modes which may switch from one mode to the other mode and vice versa during the encoding of a message, characterised in that a data field of a message is preceded by a command and control field comprising indications which can be used by a receiving means to switch from one decoding mode to another decoding mode and vice versa in order to recover the message data.

5. A system as claimed in Claim 2, 3 or 4 characterised in that one encoded mode comprises a first type data structure indicative of at least one spoken language word and in that another encoded mode comprises a second type data structure indicative of an individual alpha character.

6. A system as claimed in Claim 5, characterised in that the first type data structure comprises a data structure indicative of at least one spoken language word and a space character.

7. A system as claimed in Claim 5, characterised in that the receiving means comprises a non-volatile memory storing words at predetermined storage locations and in that the first type data structure comprises pairs of characters identifying storage locations in the memory, and in that when said storage location is interrogated the corresponding at least one spoken language word is read out character by character in the form of the second type data structure.

8. A system as claimed in Claim 5, characterised in that said indications indicate the location of, and number of characters in a series of individual alpha characters in the data field.

9. A system as claimed in Claim 8, characterised in that the number of series of individual alpha characters is limited to a maximum n, and that when there are n series of individual alpha characters, the nth series terminates the data message.

10. A system as claimed in any one of Claims 1 to 4, characterised in that the command and control field includes an indication of the number of code words in a message.

11. A receiving apparatus for use in a communications system as claimed in any one of Claims 1 to 4, comprising means for receiving and recovering a message comprising a command and control field and a data field, and means for decoding the code words in the data field in accordance with indications given in the command and control field which are used to enable the decoding of the data field to be compatible with the encoding of the message data, said data field comprises alpha-numeric messages in at least two formats, at least one of which formats is a compressed format whereby said indications are indicative of whether a compressed format has been used in the data field.

12. A transmitting apparatus for use in a communications system as claimed in any one of claims 1 to 4, comprising means for encoding alpha-numeric messages in at least two formats, at least one of which fomats is a compressed format, characterised in that a data field of a message is preceded by a command and control field and in that the first character of the command aned control field is indicative of whether a compressed format has been used in the data field.

## Patentansprüche

1. Digitales Kommunikationssystem mit einem Übertragungsmittel und mit einem Empfangsmittel, wobei das Übertragungsmittel Mittel aufweist zum Codieren alphanumerischer Nachrichten in wenigstens zwei Formate, wobei wenigstens eines derselben ein komprimiertes Format ist, dadurch gekennzeichnet, daß einem Datenfeld einer Nachricht ein Befehls- und Steuerfeld vorhergeht, und daß das erste Zeichen des Befehls- und Steuerfeldes indikativ dafür ist, ob ein komprimiertes Format in dem Datenfeld verwendet worden ist.

2. System nach Anspruch 1, dadurch gekennzeichnet, daß das erste Zeichen ein ASCII 7 Bit Zeichen ist.

3. System nach Anspruch 1, dadurch gekennzeichnet, daß die genannten Codierungsmittel, wenn in dem genannten komprimierten Format, alphanumerische Nachrichten in wenigstens zwei Moden codieren, die beim Codieren einer Nachricht von der einen auf die andere Mode und umgekehrt umschalten können, und daß das Befehls- und Steuerfeld Angaben aufweist, die von einem Empfangsmittel benutzt werden können um von der einen Decodierungsmode auf eine andere Decodierungsmode und umgekehrt umzuschalten, damit die Nachrichtendaten wiederhergestellt werden.

4. Digitales Kommunikationssystem mit einem Übertragungsmittel und einem Empfangsmittel, wobei das Übertragungsmittel Mittel aufweist zum Codieren alphanumerischer Nachrichten in wenigstens zwei Moden, die beim Codieren einer Nachricht von der einen auf die andere Mode und umgekehrt umschalten können, dadurch gekennzeichnet, daß einem Datenfeld einer Nachricht ein Befehls- und Steuerfeld vorhergeht, das Angaben aufweist, die von einem Empfangsmittel benutzt werden können um von der einen Decodierungsmode auf eine andere Decodierungsmode und umgekehrt umzuschalten, damit die Nachrichtendaten wiederhergestellt werden.

5. System nach Anspruch 2, 3 oder 4, dadurch gekennzeichnet, daß eine der codierten Moden eine erste Art von Datenstruktur aufweist, indikativ für wenigstens ein gesprochenes Wort enthält und daß eine andere Mode eine zweite Art von Datenstruktur enthält, indikativ für einen einzelnen Buchstaben.

6. System nach Anspruch 5, dadurch gekennzeichnet, daß die erste Art von Datenstruktur eine datenstruktur aufweist, die indikativ ist für wenigstens ein gesprochene Sprachenwort und ein Leerraumzeichen.

7. System nach Anspruch 5, dadurch gekennzeichnet, daß die Empfangsmittel enen nicht-flüchtigen Speicher aufweisen, der Wörter speichertan vorbestimmten Speicherstellen und daß die erste Art von Datenstruktur Paaren von Zeichen aufweisen, die Speicherstellen in dem Speicher identifizieren, und daß, wenn die genannte Speicherstelle abgefragt wird, das entsprechende wenigstens eine gesprochene Sprachewort buchstabenweise in Form der zweiten Art der Datenstruktur ausgelesen wird.

8. System nach Anspruch 5, dadurch gekennzeichnet, daß die genannten Angaben die Stelle und die Anzahl Zeichen in einer Reihe einzelner Zeichen in dem datenfeld angeben.

9. System nach Anspruch 8, dadurch gekennzeichnet, daß die Anzahl Reihen einzelner Zeichen auf ein Maximum n beschränkt ist und daß wenn es n Reihen einzelner Zeichen gibt, die n. Reihe die Datennachricht abschließt.

10. System nach einem der Ansprüche 1 bis 4, dadurch gekennzeichnet, daß das Befehls- und Steuerfeld eine Anzeige enthält über die Anzahl Codewörter in einer Nachricht.

11. Empfangsanordnung zum Gebrauch bei einem Kommunikationssystem nach Anspruch einem der Ansprüche 1 bis 4, mit Mitteln zum Empfangen und Wiederherstellen einer Nachricht mit einem Befehls- und Steuerfeld und mit einem Datenfeld, und mit Mitteln zum Decodieren von Codewörtem in dem Datenfeld nach Angaben in dem Befehls- und Steuerfeld, die verwendet werden, damit es möglich ist, daß die Decodierung des datenfeldes mit der Codierung der Nachrichtendaten kompatibel ist, wobei dieses Datenfeld alphanumerische Nachrichten in wenigstens zwei Formaten enthält, von denen wenigstens ein Format ein komprimiertes Format ist, wobei die genannten Angaben indikativ sind ob ein komprimiertes Format in dem Datenfeld verwendet worden ist.

12. Übertragungsanordnung zum Gebrauch bei einem Kommunikationssystem bach einem der Ansprüche 1 bis 4, mit Mitteln zum Codieren alphanumerischer Nachrichten in wenigstens zwei Formaten, wobei wenigstens ein Format ein komprimiertes Format ist, dadurch gekennzeichnet, daß einem Datenfeld einer Nachricht ein Befehls- und Steuerfeld vorhergeht und daß das erste Zeichen des Befehls- und Steuerfeldes indikativ ist, ob ein komprimiertes Format in dem Datenfeld verwendet worden ist.

## Revendications

1. Système de télécommunications numérique, comprenant des moyens de transmission et des moyens de réception, dans lequel les moyens de transmission comprennent de moyens pour coder des messages alphanumériques dans au moins deux formats, dont au moins un format est un format comprimé, caractérisé en ce qu'un champ de données d'un message est précédé d'un champ de commande et de contrôle et en ce que le premier caractère du champ de commande et de contrôle indique si oui ou non un format comprimé a été utilisé dans le champ de données.

2. Système suivant la revendication 1, caractérisé en ce que ledit premier caractère est un caractère ASCII de 7 bits.

3. Système suivant la revendication 1, caractérisé en ce que lesdits moyens de codage, si dans ledit format comprimé, sont propres à coder des messages alphanumériques dans au moins deux modes qui peuvent basculer d'un mode à un autre mode et inversement pendant le codage d'un message et en ce que le champ de commande et de contrôle comprend des indications qui peuvent être utilisées par des moyens de réception pour basculer d'un mode de décodage à un autre mode de décodage et inversement afin d'extraire les données de message.

4. Système de télécommunications numérique, comprenant des moyens de transmission et des moyens de réception, dans lequel les moyens de transmission comportent des moyens pour coder des messages alphanumériques dans au moins deux modes qui peuvent basculer d'un mode à l'autre mode et inversement pendant le codage d'un message, caractérisé en ce qu'un champ de données d'un message est précédé d'un champ de commande et de contrôle comprenant des indications qui peuvent être utilisées par des moyens de réception pour basculer d'un mode de décodage à un autre mode de décodage et inversement afin d'extraire les données de message.

5. Système suivant la revendication 2, 3 ou 4, caractérisé en ce qu'un mode codé comprend une structure de données de premier type indiquant au moins un mot de langue parlée et en ce qu'un autre mode codé comprend une structure de données de deuxième type indiquant un caractère alpha individuel.

6. Système suivant la revendication 5, caractérisé en ce que la structure de données de premier type comprend une structure de données indiquant au moins un mot de langue parlée et un caractère d'espace.

7. Système suivant la revendication 5, caractérisé en ce que les moyens de réception comprennent une mémoire rémanente stockant des mots dans des emplacements de stockage prédéterminés et en ce que la structure de données de premier type comprend des paires de caractères identifiant des emplacements de stockage dans la mémoire, et en ce que, lorsque ledit emplacement de stockage est interrogé, le au moins un mot de langue parlée correspondant est lu caractère par caractère sous la forme de la structure de données de deuxième type.

8. Système suivant la revendication 5, caractérisé en ce que lesdites indications indiquent l'emplacement et le nombre de caractères dans une série de caractères alpha individuels dans le champ de données.

9. Système suivant la revendication 8, caractérisé en ce que le nombre de séries de caractères alpha individuels est limité à un maximum n, et en ce qu'il existe n séries de caractères alpha individuels, la énième série terminant le message de données.

10. Système suivant l'une quelconque des revendications 1 à 4, caractérisé en ce que le champ de commande et de contrôle comprend une indication du nombre de mots de code dans un message.

11. Appareil de réception à utiliser dans un système de télécommunications suivant l'une quelconque des revendications 1 à 4, comprenant des moyens pour recevoir et extraire un message comprenant un champ de commande et de contrôle et un champ de données, et des moyens pour décoder les mots de code dans le champ de données suivant les indications données dans le champ de commande et de contrôle qui sont utilisées pour permettre la compatibilité du décodage du champ de données et du codage des données de message, ledit champ de données comprenant des messages alphanumériques dans au moins deux formats, dont au moins un format est un format comprimé, en sachant que lesdites indications indiquent si oui ou non un format comprimé a été utilisé dans le champ de données.

12. Appareil de transmission à utiliser dans un système de télécommunications suivant l'une quelconque des revendications 1 à 4, comprenant des moyens pour coder des messages alphanumériques dans au moins deux formats, dont au moins un est un format comprimé, caractérisé en ce qu'un champ de données d'un message est précédé d'un champ de commande et de contrôle et en ce que le premier caractère du champ de commande et de contrôle indique si oui ou non un format comprimé a été utilisé dans le champ de données.
